**Europäisches Patentamt**

**European Patent Office**

**Office européen des brevets**

(11) Veröffentlichungsnummer: **0 209 789**
**A2**

## (12) EUROPÄISCHE PATENTANMELDUNG

(21) Anmeldenummer: **86109279.9**

(22) Anmeldetag: **08.07.86**

(51) Int. Cl.⁴: **C 02 F 1/28**

(30) Priorität: **23.07.85 DE 3526181**

(43) Veröffentlichungstag der Anmeldung:
**28.01.87 Patentblatt 87/5**

(84) Benannte Vertragsstaaten:
**DE FR GB IT**

(71) Anmelder: **BAYER AG**
**Konzernverwaltung RP Patentabteilung**
**D-5090 Leverkusen 1 Bayerwerk(DE)**

(72) Erfinder: **Reischl, Artur, Dr.**
**H.T.-von-Böttinger-Strasse 19**
**D-5090 Leverkusen 1(DE)**

(54) Verfahren zum Beseitigen von Verunreinigungen aus Gemischen von Wasser mit mit Wasser mischbaren Lösungsmitteln.

(57) Ein Verfahren zum Beseitigen von suspendierten, emulgierten und/oder kolloidal gelösten festen oder flüssigen Verunreinigungen aus Gemischen von (i) Wasser mit (ii) mit Wasser mischbaren Losungsmitteln, wobei man die zu reinigenden Gemische mit zumindest teilweise offenzelligen Schaumstoffen in Kontakt bringt, die adsorbierend wirkende, pulverförmige Zusatzstoffe in einer Menge von 1 bis 75 Gew.-%, bezogen auf die gesamte Trockensubstanz mittels eines polymeren Bindemittels fixiert oder eingebaut enthalten und anschließend die flüssige Phase von der festen Phase trennt.

BAYER AKTIENGESELLSCHAFT          5090 Leverkusen, Bayerwerk
Konzernverwaltung RP
Patentabteilung                   Wr/by-c

Verfahren zum Beseitigen von Verunreinigungen aus Gemischen von Wasser mit mit Wasser mischbaren Lösungsmitteln

Die Erfindung betrifft ein neues Verfahren zum Beseitigen
von suspendierten, emulgierten und/oder kolloidal gelösten
festen oder flüssigen Verunreinigungen aus Gemischen von
Wasser mit mit Wasser mischbaren Lösungsmitteln, bei
welchen man die zu reinigenden Gemische mit mit adsorbierend wirkenden Substanzen beladenen Schaumstoffen in
Kontakt bringt und anschließend die flüssige Phase von der
festen Phase trennt.

Mit Wasser verdünnte organische Lösungsmittel fallen in
der chemischen Industrie in vielen Produktionsbereichen
an, z.B. bei der Produktion von Farbstoffen oder bei der
Herstellung von Synthesefasern wie beispielsweise
elastischen Polyurethan-Fasern oder von Polyacrylnitril-
Fasern, die aus organischer Lösung versponnen werden, und
die Restmengen an Lösungsmittel enthalten, welches mit
Hilfe von Wasser herausgewaschen wird. Hierbei entstehen
Gemische aus Wasser und den genannten Lösungsmitteln, die
bei einem Wassergehalt von 75 bis 99, meistens 85 bis

Le A 23 405

97 Gew.-% nicht nur das herausgewaschene Lösungsmittel sondern produktionsbedingte Verunreinigungen enthalten. Bei diesen Verunreinigungen handelt es sich im Falle der Herstellung von Polyacrylnitril-Fasern beispielsweise um Weichmacher wie Stearylphosphate, Polyalkylenpolyether, sonstige Emulgatoren, Mineral-, Schmier- und Silikonöle, Fettalkohole, Pigmente und/oder Faserabrieb. Diese Verunreinigungen liegen in den Gemischen im allgemeinen in suspendierter, emulgierter und/oder kolloidal gelöster Form vor. Für eine wirtschaftliche Faserproduktion ist es jedoch erstrebenswert, das in den Gemischen vorliegende Lösungsmittel wiederzugewinnen, um es erneut beim Spinnprozeß einsetzen zu können. Eine destillative Aufarbeitung der mit den Verunreinigungen versetzten Gemische ist oftmals nur unter größten Schwierigkeiten möglich, da sich die Verunreinigungen während der Destillation als Krusten an den Innenwänden der Destillationsapparatur abscheiden und so eine Wärmeübertragung erschweren oder sogar unterbinden. Man sah sich daher bis heute, insbesondere im Falle des Vorliegens von stark verschmutzten Gemischen aus Wasser und Lösungsmittel gezwungen, oftmals auf eine destillative Aufarbeitung zu verzichten, und die genannten Gemische der biologischen Abwasserreinigung zuzuführen, was selbstverständlich nicht nur eine Belastung der existierenden Kläranlagen sondern auch einen Verlust des Lösungsmittels zur Folge hat.

Auch der Gedanke, die genannten Verunreinigungen durch Filtration zu entfernen, führte bislang nicht zum gewünschten Ergebnis, da sich sowohl die Verwendung von Sand als auch von Mischmedienfiltrationsstoffen als auch von

Le A 23 405

speziellen Tuchfiltern zur Entfernung der Verunreinigungen selbst bei gleichzeitiger Mitverwendung von Flockungsmitteln als ungeeignet erwiesen.

Auch die in EP-A-00 77 411 beschriebene Verwendung von Polyurethanschaumstoffteilchen zum Beseitigen von suspendierten Feststoffen aus Flüssigkeiten, insbesondere Wasser, ist zur Lösung des genannten Problems ungeeignet.

Es war somit die der Erfindung zugrundeliegende Aufgabe, ein Verfahren zur Verfügung zu stellen, welches zum Beseitigen von suspendierten, emulgierten und/oder kolloidal gelösten festen oder flüssigen Verunreinigungen aus Gemischen der genannten Art von Wasser mit mit Wasser mischbaren Lösungsmitteln geeignet ist.

Diese Aufgabe konnte mit dem nachstehend näher beschriebenen erfindungsgemäßen Verfahren gelöst werden.

Gegenstand der Erfindung ist ein Verfahren zum Beseitigen von suspendierten, emulgierten und/oder kolloidal gelösten festen oder flüssigen Verunreinigungen aus Gemischen von (i) Wasser mit (ii) mit Wasser mischbaren Lösungsmitteln, dadurch gekennzeichnet, daß man die zu reinigenden Gemische mit zumindest teilweise offenzelligen Schaumstoffen in Kontakt bringt, die adsorbierend wirkende, pulverförmige Zusatzstoffe in einer Menge von 1 bis 75 Gew.-%, bezogen auf die gesamte Trockensubstanz, mittels eines polymeren Bindemittels fixiert oder durch Einbau bei der Herstellung der Schaumstoffe unter Vermischen mit mindestens einem der bei der Schaumstoffherstellung ver-

Le A 23 405

wendeten Ausgangsmaterialien eingebaut enthalten, und anschließend die flüssige Phase von der festen Phase trennt.

Bei den beim erfindungsgemäßen Verfahren zu reinigenden Gemischen handelt es sich um solche von (i) Wasser mit (ii) mit Wasser mischbaren Lösungsmitteln, insbesondere mit Dimethylformamid und/oder Dimethylacetamid. Diese beim erfindungsgemäßen Verfahren zu reinigenden Gemische weisen im allgemeinen ca. 75 bis 99, vorzugsweise ca. 85 bis 97 Gew.-% Wasser, ca. 0,5 bis 25, meistens ca. 2,5 bis 15 Gew.-% der genannten Lösungsmittel und bis zu ca. 2,5 Gew.-%, meistens ca. 0,002 bis 0,4 Gew.-% der genannten Verunreinigungen auf, die sich jedoch beim Versuch einer destillativen Aufarbeitung, wie ausgeführt, anreichern und trotz ihrer geringen Konzentration zu den genannten Schwierigkeiten führen.

Bei den erfindungswesentlichen, als "Filter" verwendeten Schaumstoffen handelt es sich um beliebige Kunststoffschaumstoffe, wie sie durch Polymerisation, Polykondensation oder Polyaddition hergestellt werden können. Die Schaumstoffe müssen jedoch zumindest teilweise, vorzugsweise zumindest 50 %, besonders bevorzugt zu mehr als 80 %, offenzellig sein. Vorzugsweise werden elastische, überwiegend offenzellige Polyurethanschaumstoffe oder Polyurethanschaumstoff-Abfälle einer (mittleren) Dichte in unbeladenem Zustand von 10 bis 200, vorzugsweise 15 bis 100 kg/m$^3$ verwendet.

Die beim erfindungsgemäßen Verfahren zum Einsatz gelangenden Schaumstoffe sind mit adsorbierend wirkenden pulverförmigen Zusatzstoffen beladen, wobei die Menge dieser

Le A 23 405

Zusatzstoffe 1 bis 75, vorzugsweise 10 bis 55 Gew.-%, bezogen auf die gesamte Trockensubstanz, ausmacht.

Geeignete adsorbierend wirkende, pulverförmige Zusatzstoffe sind beispielsweise Aktivkohle, Braunkohlenstaub, Torf, Eisenoxide, insbesondere Eisen(III)-oxide und/oder Braunkohlenkoksstaub. Bevorzugte adsorbierend wirkende Zusatzstoffe sind Aktivkohle und Braunkohlenstaub. Andere adsorbierend wirkende Zusatzstoffe wie z.B. Kieselgur, Kieselsäuren oder Aluminiumoxide können gegebenenfalls neben den genannten, besser geeigneten Zusatzstoffen mitverwendet werden, wobei sich die obengemachten Mengenangaben auf die Gesamtmenge aller adsorbierend wirkenden Zusatzstoffe bezieht. Vorzugsweise werden jedoch solche Schaumstoffe eingesetzt, deren Zusatzstoffe sich zumindest zu 30 Gew.-% aus den genannten, bevorzugten Zusatzstoffen zusammensetzen.

Die genannten Zusatzstoffe sind in oder auf den Zellstegen des Schaumstoffs fixiert oder eingebaut.

Die Fixierung der Zusatzstoffe kann mittels eines polymeren Bindemittels erfolgen.

Als Bindemittel für die Füllstoffe dienen Polymerisate olefinisch ungesättigter Monomerer, die vorzugsweise in Form ihrer wäßrigen Dispersionen verwendet werden und/oder Polyurethane, die bevorzugt als Polyisocyanat-Prepolymere, gegebenenfalls als wäßrige Emulsion oder als wäßrige Polyurethandispersion eingesetzt werden. Geeignete Polymerisatdispersionen sind beispielsweise Naturkautschuk-Latex,

Le A 23 405

Styrol-Butadien-Latex, Butadien-Acrylnitril-(Acrylat-)-Latex, Polyvinylacetat-Latex, mit gegebenenfalls teilweise verseiften Estergruppen (Polyvinylacetat-Polyvinylalkohol-Polymerisate) und ähnliche, aus der Polymerisatchemie bekannte Dispersionen. Die Polymeren können nichtionisch sein oder anionische und/oder kationische Gruppe im Makromolekül oder Emulgatoren aufweisen.

Geeignete Bindemittel auf Polyurethanbasis sind beispielsweise NCO-Prepolymere wie sie in an sich bekannter Weise durch Umsetzung von überschüssigen Mengen an organischen Diisocyanaten wie z.B. 2,4- und/oder 2,6-Diisocyanatotoluol mit höhermolekularen Polyhydroxylverbindungen einer Hydroxylfunktionalität von 2 bis 3, insbesondere Polyhydroxypolyethern des Molekulargewichtsbereichs 1000 bis 6000 unter Einhaltung eines NCO/OH-Äquivalentverhältnisses von 1,3:1 bis 3:1 erhalten werden. Oftmals sind solche NCO-Prepolymere bevorzugt, die eingebaute kationische Gruppen oder in kationische Gruppen überführbare Gruppen, d.h. insbesondere tert. Stickstoffatome, oder Ammoniumgruppen enthalten. Derartige NCO-Prepolymere werden beispielsweise dann erhalten, wenn bei der Herstellung tert. Stickstoffatome aufweisende Polyetherpolyole (mit)verwendet werden, beispielsweise die Propoxylierungsprodukte von N-Methyldiethanolamin. Ebenfalls möglich ist die Mitverwendung von derartigen Aminoalkoholen in Abmischung mit stickstofffreien Polyetherpolyolen bei der Herstellung der NCO-Prepolymeren. Niedermolekulare Di- und Polyisocyanate können in den NCO-Prepolymeren zusätzlich bis zu etwa 50 Gew.-%, bezogen auf alle Isocyanatoverbindungen enthalten sein. Die Überführung der tert. Stickstoffatome in Ammoniumgruppen kann im Anschluß an die Prepolymerbildung

Le A 23 405

durch Alkylierungsmittel wie Dimethylsulfat oder auch "in situ" durch Reaktion der tert. Stickstoffatome mit in den Füllstoffen vorliegenden sauren Gruppen (Huminsäuren in Braunkohle oder Torf) erfolgen. Im Falle der Verwendung von derartigen kationischen NCO-Prepolymeren weisen diese im allgemeinen einen Gehalt an tert. Stickstoffatomen bzw. an Ammoniumgruppen von 10 bis 1000, vorzugsweise 50 bis 500 Milliäquivalenten pro 1000 g auf.

Weitere Bindemittel auf Polyurethanbasis sind die an sich bekannten wäßrigen Polyurethandispersionen, die vorzugsweise chemisch fixierte kationische Gruppen aufweisen. Der Gehalt an kationischen Gruppen entspricht den obengemachten Ausführungen bezüglich der kationischen NCO-Prepolymeren. Derartige kationische Polyurethandispersionen können beispielsweise gemäß US-PS 3 479 310 oder gemäß GB-PS 1 076 688 erhalten werden.

Die Polymerisat- und Polyurethandispersionen weisen im allgemeinen einen Feststoffgehalt von 10 bis 55, vorzugsweise 20 bis 45 Gew.-% auf.

Zur Herstellung der beim erfindungsgemäßen Verfahren einzusetzenden Schaumstoffe mit fixierten Füllstoffen unter Verwendung der beispielhaft genannten Polymerisat- oder Polyurethandispersionen erfolgt im allgemeinen dergestalt, daß man den zu beladenden Schaumstoff, den Zusatzstoff und die Dispersion innig miteinander vermischt, wobei die Einzelkomponenten in solchen Mengen eingesetzt werden, daß in den Gemischen, bezogen auf Feststoff, 5 bis 85, vorzugsweise 5 bis 60 Gew.-% Schaumstoff, 1 bis 75, vorzugsweise 10 bis 55 Gew.-% Zusatzstoff und 2 bis 60, vorzugsweise 10 bis 40 Gew.-% Bindemittel vorliegen, wobei sich

Le A 23 405

die genannten Prozentangaben jeweils auf 100 ergänzen. Gegebenenfalls wird bei der Durchmischung der Komponenten zusätzliches Wasser hinzugefügt, so daß der Gesamtwassergehalt des Gemischs vor der Koagulation bei 20 bis 80, vorzugsweise bei 40 bis 60 Gew.-%, bezogen auf Gesamtgemisch beträgt. Im Anschluß an die Durchmischung wird für Koagulation des Bindemittels Sorge getragen. Dies kann beispielsweise durch Hinzufügung eines Koagulanz und/oder durch eine Wärmebehandlung des Gemischs erfolgen. Geeignete Koagulantien sind beispielsweise Kalziumchlorid, Magnesiumsulfat, Natriumchlorid, Salzsäure, Schwefelsäure oder Essigsäure in 2-5-Gew.-%iger wäßriger Lösung. Zur Koagulation wird das Koagulanz dem Gemisch beispielsweise in einer Menge von 0,1 bis 5 Gew.-%, jeweils bezogen auf Feststoff des Koagulanz und Feststoff der zu koagulierenden Dispersion, zugemischt. Im Anschluß an die Zugabe des Koagulanz wird die Mischleistung des verwendeten Mischaggregats im allgemeinen gedrosselt und die Koagulation vorzugsweise durch Erwärmen des Mischguts auf ca. 60 bis 100°C beschleunigt. Im Anschluß an die Koagulation fallen die beim erfindungsgemäßen Verfahren einsetzbaren Schaumstoffe in Form wasserhaltiger Granulate an, deren Teilchengröße in erster Näherung der Teilchengröße der eingesetzten Ausgangsschaumstoffe entspricht und bei 2 bis 30 mm liegt.

Im Falle der Verwendung von NCO-Prepolymeren der beispielhaft genannten Art wird die Durchmischung auf gleiche Weise durchgeführt, wobei die gemachten Angaben bezüglich des Bindemittelgehalts und des Wassergehalts des Gemischs den gemachten Angaben entsprechen. Im Falle der Verwendung von nichtionischen, hydrophoben NCO-Prepolymeren erübrigt sich selbstverständlich eine in diesem Falle sinnlose Zu-

Le A 23 405

gabe eines Koagulanz'. Die Fixierung des Zusatzstoffes durch das Bindemittel erfolgt hierbei aufgrund der spontan ablaufenden NCO/Wasser-Reaktion. Bei Verwendung von kationisch modifizierten NCO-Prepolymeren kann diese Fixierung am Schaumstoff durch Zugabe eines Koagulanz' beschleunigt oder verbessert werden. Bei Verwendung von NCO-Prepolymeren kann aufgrund der Kohlendioxidbildung während der NCO/Wasser-Reaktion eine oft erwünschte, zusätzliche Zellenbildung erfolgen, so daß es sich bei den letztendlich erhaltenen Schaumstoffen um Kombinationsschaumstoffe handelt. Auch bei Verwendung von NCO-Prepolymeren entspricht die Teilchengröße der anfallenden, wasserhaltigen, beladenen Schaumstoffe in erster Näherung der Teilchengröße des eingesetzten Schaumstoffs und liegt bei 2 bis 30 mm. In speziellen Fällen erfolgt die Verfestigung unter Druckanwendung. Der so erhaltene Verbundschaumstoff wird anschließend zerkleinert.

Bei der genannten 2.Variante der Herstellung der beim erfindungsgemäßen Verfahren einzusetzenden, beladenen Schaumstoffe erfolgt die Fixierung der Zusatzstoffe durch Einbau in dem Schaumgerüst. Dies kann beispielsweise dergestalt erfolgen, daß man die Zusatzstoffe mit Wasser und NCO-Prepolymeren der beispielhaft genannten Art, insbesondere mit NCO-Prepolymeren mit eingebauten tert. Stickstoffatomen oder mit eingebauten Ammoniumgruppen, vorzugsweise unter Zusatz von Schaumstabilisatoren vermischt, wonach spontan die Bildung eines für das erfindungsgemäße Verfahren geeigneten, beladenen Schaumstoffs erfolgt, der im Anschluß an die chemische Reaktion durch mechanisches Zerkleinern in Granulate einer Teilchengröße von 2 bis 30 mm zerlegt wird. Bei dieser Ausführungsform der Herstellung der für das erfindungsgemäße Verfahren geeigneten, beladenen Schaumstoffe, werden die Mengenverhältnisse der genannten Reaktionspartner so bemessen, daß,
bezogen auf Summe NCO-Prepolymer + Zusatzstoff 30 bis
50 Gew.-% NCO-Prepolymer und 50 bis 70 Gew.-% Füllstoff
vorliegen. Der Wassergehalt des Gemischs entspricht den
obengemachten Ausführungen.

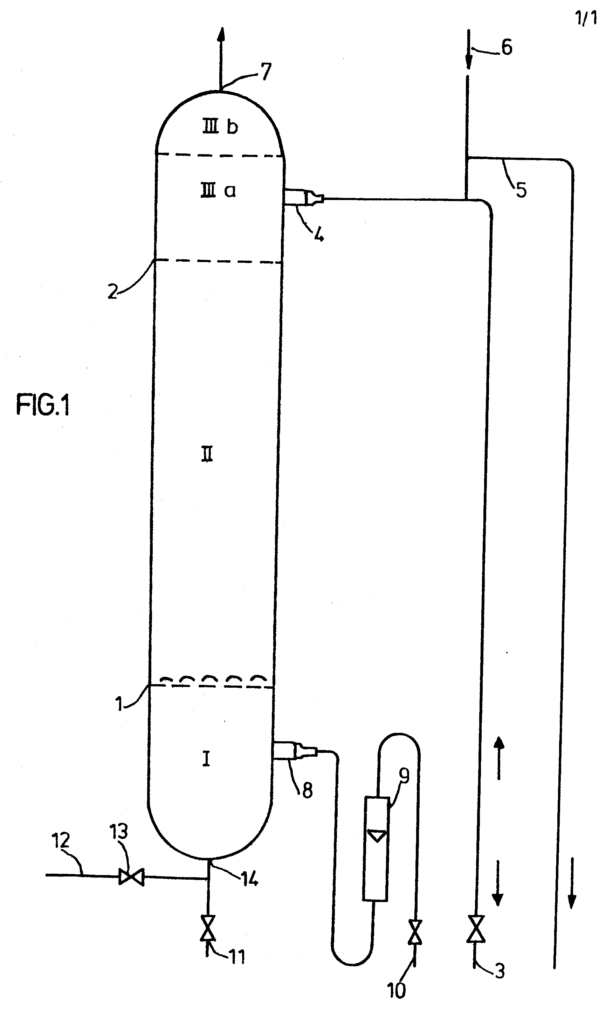

Zur Durchführung des erfindungsgemäßen Verfahrens wird das
zu reinigende Gemisch, gegebenenfalls nach Zugabe von ca.
30 bis 150 ppm (Gewicht), bezogen auf Abwasser, eines
Fällungsmittels, beispielsweise von "Klärhilfsmittel
44009 A" der Bayer AG, Leverkusen, das einen Teil der
ursprünglich kolloidal gelösten Verunreinigungen sehr
feindispers ausscheidet, mit den beladenen Schaumstoffen
in Kontakt gebracht. Eine hierzu besonders gut geeignete
Arbeitsweise besteht in der Verwendung einer Filtersäule,
wie sie beispielsweise in der nachstehenden Figur 1
schematisch dargestellt ist. In dieser Figur bedeuten im
einzelnen:

I: untere Abschlußhaube der Filtersäule;

II: zylindrisches Glasrohr, welches zur Aufnahme des
modifizierten Schaumstoffs dient;

III: obere Abschlußhaube der Filtersäule;

IIIa: mit Flüssigkeit gefüllter Teil der oberen
Abschlußhaube;

IIIb: gasgefüllter Teil der oberen Abschlußhaube;

(1): einen Glockenboden;

(2): eine Lochplatte;

(3): Einlaßleitung mit Ventil für zu reinigendes Gemisch
bzw. Ablaufleitung bei nachfolgender Spülung;

Le A 23 405

(4): Zulaufstelle für zu reinigendes Gemisch;

(5): Überlaufleitung;

(6): Belüftungsöffnung;

(7): Belüftungsöffnung;

(8): Ablaufstelle für gereinigtes Gemisch;

(9): Durchflußmesser;

(10): Ventil;

(11): Entleerungsventil und Durchlaßventil für Wachwasser;

(12): Einlaßleitung für Preßluft;

(13): Einlaßventil für Preßluft;

(14): Einlaßstelle für Waschwasser und Preßluft.


Zur Durchführung des erfindungsgemäßen Verfahrens wird der Mittelteil II der Filtersäule mit dem Schaumstoffgranulat zu etwa 50-80 Vol.-% gefüllt. Anschließend wird das zu reinigende Gemisch über (4) von oben nach unten durch den mit Schaumstoff teilweise gefüllten Mittelraum II geleitet und über (8) - (10) der Säule entnommen. Die Abmessungen der Säule, die Menge des Schaumstoffs und die Durchflußmenge werden so gewählt, daß die mittlere Verweilzeit des zu reinigenden Gemischs am Schaumstoff 1 bis 30, vorzugsweise 2 bis 15 Minuten beträgt. Die Temperatur in der Säule liegt vorzugsweise bei ca. 15 bis 50°C, wobei die höheren Temperaturen auf die Eigentemperatu des zu reinigenden Gemischs zurückzuführen sind.


Die Filtersäule kann solange betrieben werden, bis das ablaufende Gemisch aus Wasser und Lösungsmittel erste Anzeichen einer Trübung erkennen läßt. Mit der erfindungsgemäßen Maßnahme wird erreicht, daß die bei der destillativen Aufarbeitung der Gemische insbesondere störenden Verunreinigungen (Krustenbildung an den Innenwänden der

Le A 23 405

Destillationsapparaturen) praktisch vollständig eliminiert werden, obwohl der Gesamtgehalt an nicht flüchtigen Verunreinigungen der zum Einsatz gelangenden Gemische (Eindampfrückstand) oftmals nur um 20 bis 40 % vermindert wird.

Wie bereits ausgeführt, kann das erfindungsgemäße Verfahren solange fortgeführt werden, bis im ablaufenden, gereinigten Gemisch erste Trübungen zu erkennen sind. Das erfindungsgemäße Verfahren wird spätestens zu diesem Zeitpunkt abgebrochen, um die Filtersäule zu regenerieren. Hierzu wird zwecks Abscheidung der an den Schaumstoffen abgelagerten Verunreinigungen Wasser, vorzugsweise mit Preßluft gemischt von unten nach oben durch die Säule geleitet, wobei die Strömungsverhältnisse so gewählt werden, daß die Schaumstoffgranulate heftig durchwirbelt und völlig vom Belag befreit werden. Die so regenerierte Filtermasse kann sofort erneut erfindungsgemäß verwendet werden. Eine weitergehende mechanische Reinigung der Filtermassen ist jedenfalls nicht erforderlich.

Beispiel

1. Apparatur und Betriebsweise: (Figur 1)

Eine senkrechte Filtersäule, bestehend aus einem zylindrischen Glasrohr II von 600 mm lichtem Durchmesser und 2000 mm Höhe und zwei Abschlußhauben I und III von je 800 mm Höhe mit je einem axialen (7) und (14) und seitlichen (4) und (8) Stutzen, wird durch einen unteren Glockenboden (1) und eine obere Lochplatte (2) in den unteren Filterraum I, den mittleren Filterraum II und den oberen Filterraum III, bestehend aus IIIa und IIIb unterteilt. Der Glockenboden (1) ist ein handelsübliches Standardeinbauteil für Sandfilter und ist mit Schlitzglocken von 40 mm Durchmesser bestückt (30 Glocken, Schlitzhöhe 10 mm, Schlitzbreite 1 mm).

Die obere Lochplatte (2) ist ein Lochblech mit Löchern eines Lochdurchmessers von 2,5 mm. Der zwischen dem Glockenboden (1) und der Lochplatte (2) befindliche Filterraum dient zur Aufnahme des Filterbetts, bestehend aus dem erfindungsgemäß einzusetzenden, beladenen granulierten Schaumstoff, der sich im Wasser absetzt (die erfindungsgemäß zu verwendenden, beladenen Schaumstoffe weisen im allgemeinen eine über 1 g/cm$^3$ liegende Dichte auf). Das zu reinigende Gemisch wird mit einem Klärhilfsmittel vermischt und mittels einer Pumpe über das Ventil (3) und den anschließenden Stutzen (4) in den oberen Filterraum IIIa eingefüllt. Die mit einer Belüftungsöffnung (6) versehene Überlaufleitung (5) ist so angebracht, daß eine zu vernachläßigende, kleine

Le A 23 405

Überschußmenge des Abwassers stetig überläuft, so daß in dem oberen Filterraum IIIa ein konstantes Niveau gehalten wird. Über das Luftpolster des oberen Filterraums IIIb wird die Filtersäule am Stutzen (7) belüftet. Nach dem Durchlauf durch das Filterbett tritt die gereinigte Abwasserlösung in den unteren Filterraum I ein und verläßt über den Stutzen (8) und den Durchflußmesser (9) und das Ventil (10) als Regeneratlösung die Filteranlage.

Wenn nach einem Filtrierzyklus die verschmutzte Filtermasse von den anhaftenden Schmutzstoffen befreit werden soll, wird die Zudosierung des Abwassers abgestellt und die Zuleitung zum Ventil (3) unterbrochen. Man entleert das Filter über das Ablaufventil (10) und das Entleerungsventil (11) und füllt über (13) und (14) in umgekehrter Fließrichtung von unten nach oben die Filterräume I und II bis zur oberen Lochplatte (2) mit Frischwasser. Je nach Prozeßführung kann das Regenerieren des Filters natürlich auch mit Regeneratlösung oder Abwasserlösung erfolgen. In diesem Falle kann auf die vorhergehende Entleerung verzichtet werden. Nun wird über die Leitung (12) und das Ventil (13) Preßluft in den unteren Filterraum I eingeleitet. Die Luft tritt durch die Schlitze des Glockenbodens (1) in den Filterraum II über, lockert das Filterbett auf und wirbelt schließlich die Filtermasse mit dem Wasser durch.

Nachdem das Filterbett aufgelockert und die Durchwirbelung in Gang gekommen ist, führt man weiter Frischwasser oder Abwasserlösung zu und spült über die Leitung (4) und das Ventil (3) die abgelösten Schmutzstoffe aus dem Filterbett hinaus. Dabei kann der Fortgang der Reinigung über die Sedimentbildung in einer Probe des Ablaufs verfolgt werden. Geht die Sedimentbildung gegen Null, so ist die Reinigung beendet und die Spülwasserzufuhr wird abgestellt. Nach Sedimentation des regenerierten Schaumstoffs ist die Apparatur wieder einsatzbereit.

2. Durchführung des Verfahrens:

2.1. Herstellung des zur Filtration verwendeten Schaumstoffs

Die Herstellung des Schaumstoffs erfolgt kontinuierlich in einem Doppelpaddelschneckentrog. Der Gesamtdurchsatz beträgt ca. 1,5 t/h. In diesem Schneckentrog werden folgende Bestandteile gemischt:

25 Gew.-Teile (Trockensubstanz) eines Polyether-PUR-Abfallschaumstoffs (Flockengröße 1-12 mm, mittleres Raumgewicht 23 kg/m³, Schüttgewicht 14 g/l, mehr als 80 % offene Zellen);
50 Gew.-Teile, bezogen auf Trockensubstanz, Braunkohlenstaub einer mittleren Teilchengröße von weniger als 100 μm und einer Restfeuchte von 7 Gew.-%,
25 Gew.-Teile, bezogen auf Trockensubstanz, eines kationischen Polyether-Polyurethan-Prepolymeren mit endständigen Isocyanatgruppen mit einem NCO-Gehalt von 5,6 Gew.-%, einem Gehalt an Ammoniumgruppen von 120 Milliäquivalenten/1000 g, einer Viskosität bei 25°C von 9500 mPa.s, hergestellt aus 20 Gew.-Teilen eines Gemischs

Le A 23 405

aus 2,4- und 2,6-Diisocyanatotoluol (Gew.-Verhältnis =
80:20), 41,9 Gew.-Teilen eines Polyetherpolyols I,
35 Gew.-Teilen eines Polyetherpolyols II, 1,5 Gew.-
Teilen N-Methyldiethanolamin und 1,5 Gew.-Teilen Dimethylsulfat. Bei Polyetherpolyol I handelt es sich um ein Polyetherpolyol der OH-Zahl 28, hergestellt durch Propoxylierung von Trimethylolpropan und anschließende Ethoxylierung
des Propoxylierungsprodukts (Gew.-Verhältnis PO:EO =
80:20); bei Polyetherpolyol II handelt es sich um das
Propoxylierungsprodukt von 1,4-Dihydroxybutan der OH-Zahl
56.

100 Gew.-Teile Wasser.

Als Apparatur zur Herstellung der Mischung dient ein
Doppelpaddel-Schneckentrog mit einem Fassungsvolumen von
ca. 180 l und einer Länge von ca. 300 cm, dessen Paddelwellen sich gegenläufig drehen. Die Produktförderung erfolgt zwangsweise von der Eintragsöffnung in Richtung Austragsöffnung, wobei zwischen den Paddelwellen eine gewisse
Knetung bzw. Quetschung des Reaktionsgemisches erfolgt.
Der unter 12 mm zerkleinerte Polyurethanschaumstoff und
der Braunkohlenstaub werden getrennt über Dosierschnecken
in den Schneckentrog gefördert. An gleicher Stelle wird
mittels Kolbenpumpen das Wasser und mittels Zahnradpumpen
das NCO-Prepolymer eingetragen. Es ist zweckmäßig, aber
nicht unbedingt erforderlich, das kationische NCO-Prepolymere mit der etwa 2-fachen Menge Wasser von etwa 10
bis 25°C in einem Durchflußmischer oder statischen Mischer
innerhalb weniger Sekunden intensiv zu vermischen, weil
dadurch der vorgetrocknete Braunkohlenstaub außerordentlich schnell und gleichmäßig mit der getrennt zudosierten Restmenge des auf 50°C erhitzten Wassers benetzt wird und die NCO-Prepolymeren in feinstverteilter Form die Feststoffe und Schaumstoffe gleichmäßig umhüllen.

Nach einer Verweilzeit im Schneckentrog von 2-3 Minuten wird durch eine am Ende des Troges unten befindliche Öffnung in bis zur Hälfte mit Wasser gefüllten Behältern ausgetragen und auf einem Trägerband aus Stahlnetz mit Wasser gewaschen.

Das resultierende Schaumstoffmaterial hat eine offenporige Struktur und sedimentiert sofort in Wasser. In wäßriger Suspension hat das Material einen Gehalt an Trockensubstanz (TS) von 59 kg/m$^3$ ohne überstehendes Wasser.

2.2 Vorbemerkungen zur Filtration

Das zu regenerierende Abwasser ist ein Prozeßwasser aus der Polyacrylnitril-Faserherstellung,welches wiederzugewinnendes Dimethylformamid in einer Konzentration von 9,8 Gew.-% enthält. Als gelöste, emulgierte und suspendierte Verunreinigungen sind vorhanden:
anorganische Salze, Salze aus Aminen und Carbonsäuren, gelöste Farbstoffe, Emulgatoren, Mineralöl, Maschinenöl, Fettalkohole und deren Derivate, Fettsäuren und deren Derivate, Farbpigmente, Faserabrieb. Insgesamt liegen diese Verunreinigungen in einer Menge von 550 g/m$^3$ bis 802 g/m$^3$ in dem zu reinigenden Prozeßwasser vor. Diese Mengen können als Eindampfrückstand bestimmt werden.

Le A 23 405

In den zu reinigenden Abwasserstrom (2 m³/h) wird mit einer externen Dosierpumpe (nicht gezeichnet) ein kationisches Klärmittel ("Klärhilfsmittel 44009 A", Hersteller: BAYER AG) je nach Gehalt gelöster Verunreinigungen im Abwasser in einer Menge von 30 bis 150 ppm Feststoff, bezogen auf Abwasser, eindosiert. Nach Durchlaufen eines Verweilzeitgefäßes (10-30 Minuten Verweilzeit, nicht gezeichnet) wird das Abwasser der erfindungsgemäßen Filtration zugeführt.

2.3. Daten zur Filtration:

_____

Suspensionsvolumen vor der Durchführung des Versuchs (in Wasser): 0,45 m³, entsprechend 26,55 kg Trockensubstanz des modifizierten Schaumstoffs.

Suspensionsvolumen nach der Durchführung des Versuchs (in Wasser): 0,31 m³, entsprechend 26,55 kg Trockensubstanz.

Hieraus folgt, daß die Volumenkontraktion des Filterbetts im Verlaufe der Gesamtzeit des Versuchs (16 Stunden) 31 % beträgt.

Abwassereinlauf: 2,2 m³/h;

mittlere Verweilzeit im Filterraum II: 15 Minuten;

mittlere Kontaktzeit mit Schaumstoff: 7-10 Minuten.

Mit 26,55 kg Trockensubstanz Schaumstoff werden im Verlauf von 16 Stunden insgesamt 35,2 m³ Abwasser gereinigt.

Le A 23 405

2.4. Dimethylformamid (DMF)-Gehalt und Eindampfrückstand:

Der DMF-Gehalt wurde mittels des Brechungsindex' bei 20°C unter Auswertung einer Eichkurve bestimmt. Der Eindampfrückstand wurde durch Eindampfen im Vakuum und Trocknen des Rückstands bei 105°C/26 mbar bestimmt.

<u>Le A 23 405</u>

| Versuchs-dauer (h) | Abwasser DMF-Gehalt % | Eindampfrückstand mg/l | Gereinigtes H$_2$O/DMF-Gemisch DMF-Gehalt % | Eindampfrückstand mg/l | Eliminationsrate % |
|---|---|---|---|---|---|
| 1 | 9,8 | 650 | 9,8 | 485 | 25,4 |
| 4,5 | 9,8 | 700 | 9,8 | 500 | 28,5 |
| 7,5 | 9,8 | 802 | 9,8 | 601 | 25,0 |
| 12 | 9,8 | 550 | 9,8 | 398 | 27,2 |
| 14 | 9,8 | 601 | 9,8 | 452 | 25,0 |
| 16 | 9,8 | 750 | 9,8 | 451 | 26,7 |

Die Schwankungen des Eindampfrückstands im Abwasser sind darauf zurückzuführen, daß es sich um das Abwasser einer laufenden Produktion handelt, dessen Gehalt an Eindampfrückstand sich dauernd verändert. Obwohl die Elimination der Verunreinigungen nur maximal 28,5 % beträgt, kann das gereinigte Gemisch aus Wasser und Dimethylformamid problemlos destillativ in ein Konzentrat überführt werden, welches etwa gleiche Gewichtsteile an Wasser und Dimethylformamid enthält, ohne das irgendwelche Abscheidungen an der Destillationsapparatur zu beobachten wären. Die Herstellung eines entsprechenden Konzentrats unter Verwendung des nicht filtrierten Abwassers würde alsbald zu erheblichen Abscheidungen an den Innenwänden der Destillationsapparatur führen, so daß diese nach einer Betriebsdauer von ca. 2 Monaten gründlich gereinigt werden müßte. Bei der weiteren destillativen Aufarbeitung des genannten Konzentrats, welche im allgemeinen nach Abmischung des Konzentrats mit hochkonzentriertem DMF aus dem Spinnprozeß erfolgt, treten im Falle der erfindungsgemäß gereinigten Gemische weit weniger Störungen des Destillationsprozesses ein als im Falle der nicht erfindungsgemäß behandelten Abwässer. Im allgemeinen werden bis zu 75 % der vorher üblichen Unterbrechungen des Destillationsprozesses vermieden.

## Patentansprüche

1. Verfahren zum Beseitigen von suspendierten, emulgierten und/oder kolloidal gelösten festen oder flüssigen Verunreinigungen aus Gemischen von (i) Wasser mit (ii) mit Wasser mischbaren Lösungsmitteln, dadurch gekennzeichnet, daß man die zu reinigenden Gemische mit zumindest teilweise offenzelligen Schaumstoffen in Kontakt bringt, die adsorbierend wirkende, pulverförmige Zusatzstoffe in einer Menge von 1 bis 75 Gew.-%, bezogen auf die gesamte Trockensubstanz, mittels eines polymeren Bindemittels fixiert oder durch Einbau bei der Herstellung der Schaumstoffe unter Vermischen mit mindestens einem der bei der Schaumstoffherstellung verwendeten Ausgangsmaterialien eingebaut enthalten, und anschließend die flüssige Phase von der festen Phase trennt.

2. Verfahren gemäß Anspruch 1, dadurch gekennzeichnet, daß man das zu reinigende Gemisch durch eine, mit den Schaumstoffen beladene Kolonne leitet und der Kolonne am Kolonnenausgang das von den Verunreinigungen befreite Gemisch entnimmt.

3. Verfahren gemäß Anspruch 1 und 2, dadurch gekennzeichnet, daß man Schaumstoffteilchen verwendet, die in mit den Zusatzstoffen beladener Form einen mittleren Teilchendurchmesser von 2 bis 30 mm aufweisen.

Le A 23 405

4. Verfahren gemäß Anspruch 1 bis 3, dadurch gekennzeichnet, daß man als Schaumstoffe elastische Polyurethanschaumstoffe oder Polyurethanschaumstoff-Abfälle verwendet, deren Zellen zumindest zu 50 % offen sind, und die in unbeladenem Zustand eine (mittlere) Dichte von 10 bis 200 kg/m$^3$ aufweisen.

5. Verfahren gemäß Anspruch 1 bis 4, dadurch gekennzeichnet, daß man als absorbierend wirkende Zusatzstoffe Aktivkohle und/oder Braunkohlenstaub verwendet.

6. Verfahren gemäß Anspruch 1 bis 5, dadurch gekennzeichnet, daß das polymere Bindemittel aus einem Polymerisat olefinisch ungesättigter Monomerer oder aus einem Polyurethan besteht.

7. Verfahren gemäß Anspruch 1 bis 6, dadurch gekennzeichnet, daß man als zu reinigende Flüssigkeit Gemische aus (i) Wasser mit (ii) Dimethylformamid und/oder Dimethylacetamid mit einem Wassergehalt von 75 bis 99 Gew.-% verwendet, wie sie bei der Produktion von Polyacrylnitrilfasern anfallen, und die neben den genannten Bestandteilen produktionsbedingte Verunreinigungen enthalten.

Le A 23 405

FIG.1